# EUROPEAN PATENT SPECIFICATION

(11) **EP 4 576 444 B1**
(45) Date of publication and mention of the grant of the patent: **09.12.2026**
(21) Application number: 23870734.3
(22) Date of filing: 25.09.2023
(51) Int. Cl.: H04M 1/02, H01R 13/46, H01R 13/52, H01R 13/74, H01R 24/60, H04M 1/18

(54) **CONNECTOR AND ELECTRONIC DEVICE**
VERBINDER UND ELEKTRONISCHE VORRICHTUNG
CONNECTEUR ET DISPOSITIF ÉLECTRONIQUE

(30) Priority: 26.09.2022 CN 202211178600
(43) Date of publication of application: 25.06.2025
(73) Proprietor: Vivo Mobile Communication Co., Ltd., Dongguan, Guangdong 523863 (CN)
(72) Inventor: ZENG, Feng, Dongguan, Guangdong 523863 (CN); ZHU, Zhongwu, Dongguan, Guangdong 523863 (CN); ZHOU, Ziji, Dongguan, Guangdong 523863 (CN)
(74) Representative: Murgitroyd & Company
(86) International application number: PCT/CN2023/121165
(87) International publication number: WO 2024/067504

(56) References cited:
- CN-A- 113 518 524
- CN-A- 113 518 524
- CN-A- 115 473 072
- CN-U- 211 556 202
- TW-U- M 501 018
- US-A1- 2012 329 334
- US-A1- 2018 337 488
- US-A1- 2019 348 785
- US-B2- 9 660 373

## Description

### TECHNICAL FIELD

This application relates to the field of electronic device technologies, and in particular, to a connector and an electronic device.

### BACKGROUND

With the rapid development of mobile payment and the diversification of electronic device applications, increasingly high reliance is imposed on electronic devices, and higher requirements are also imposed on the functions of electronic devices, such as higher requirements on the battery life of electronic devices. To meet the higher requirements on the electronic devices, more space is needed for arranging relevant components.

In the related art, a socket of an electronic device mainly includes a socket tongue and a circuit board. The socket tongue is electrically connected to the circuit board. To ensure the electrical connection stability between the socket tongue and the circuit board, the socket tongue and the circuit board need to have a specified relative area for the electrical connection. To ensure the electrical connection stability between the socket tongue and the circuit board, it is usually necessary to increase the length of the socket tongue extending toward the circuit board, so that the socket tongue and the circuit board have a specified relative area. However, as the length of the socket tongue extending toward the circuit board is increased, the area occupied by the socket tongue is also increased, leading to the problem that the socket occupies a large space in the electronic device.

CN113518524A provides an electronic equipment, which includes a shell, a socket tongue piece and a substrate, wherein an inner cavity is formed by the shell, a jack connected with the inner cavity is disposed on the shell, the first end of the socket tongue piece is connected with the substrate, the substrate is installed in the inner cavity, the substrate blocks an inner side port of the jack, the second end of the socket tongue piece extends into the jack, and the part of the socket tongue piece in the jack is suspended in the jack.

TWM501018U shows an electrical connector. The plastic block the electrical connector is injection molded between the first body and the second body, and the plastic block fills the accommodation space in the first body and the second body. The plastic block, together with the first body and the first and second body, forms an overall appearance of the electrical connector. And plastic block has a first injection molding part located in the first accommodation space A, and has a second injection molding part located in the second accommodation space B.

### SUMMARY

This application discloses a connector, aiming to solve the problem in the related art that the length of a socket tongue extending toward a circuit board is increased to ensure the electrical connection stability between the socket tongue and the circuit board, which otherwise causes a large space occupied by a socket.

To solve the above technical problem, this application is implemented as follows.

According to a first aspect, this application discloses a connector, which is defined in claim 1.

According to a second aspect, this application further provides an electronic device, which is defined in claim 8.

Further advantageous embodiments of the present disclosure are indicated in the dependent claims.

It is to be understood that both the foregoing general description and the following detailed description are exemplary only, and are not restrictive of the present disclosure.

### BRIEF DESCRIPTION OF DRAWINGS

FIG. 1 is a schematic exploded view of a first connector according to an embodiment of this application;
FIG. 2 is a schematic diagram of an overall structure of a first connector according to an embodiment of this application;
FIG. 3 is a schematic diagram of an overall assembly of a first connector according to an embodiment of this application;
FIG. 4 is a cross-sectional view of a first connector according to an embodiment of this application;
FIG. 5 is a schematic structural diagram of a socket base of a first connector according to an embodiment of this application;
FIG. 6 is a schematic structural diagram after installation of a metal connection plate in FIG. 5;
FIG. 7 is a schematic structural diagram of a base fixing portion of a first connector according to an embodiment of this application;
FIG. 8 is an overall schematic diagram of a first connector from another perspective according to an embodiment of this application;
FIG. 9 is a schematic structural diagram of a first connector without a housing according to an embodiment of this application;
FIG. 10 is a schematic exploded view of a second connector according to an embodiment of this application;
FIG. 11 is a schematic diagram of a second connector from a first perspective according to an embodiment of this application;
FIG. 12 is a schematic structural diagram of a metal liner of a second connector according to an embodiment of this application;
FIG. 13 is a schematic diagram of a second connector from a second perspective according to an embodiment of this application;
FIG. 14 is a partial schematic diagram of a second connector according to an embodiment of this application;
FIG. 15 is a cross-sectional view of a second connector according to an embodiment of this application;
FIG. 16 is a schematic exploded view of a third connector according to an embodiment of this application;
FIG. 17 is a cross-sectional view of a third connector according to an embodiment of this application;
FIG. 18 is an overall diagram of a third connector from a first perspective according to an embodiment of this application;
FIG. 19 is an overall diagram of a third connector from a second perspective according to an embodiment of this application;
FIG. 20 is an overall schematic diagram of a fourth connector according to an embodiment of this application; and
FIG. 21 is a cross-sectional view of FIG. 20 along B-B.

Description of reference signs:
100. housing; 110. accommodating space; 120. insertion hole; 130. abutment protrusion;
200a. socket tongue; 201. second injection molding portion;
200b. socket base; 210. base fixing portion; 211. first groove; 212. first avoidance hole; 213. second groove; 214. third groove;
220. base main body; 221. first protrusion; 222. base body; 223. terminal partition plate; 224. terminal strip;
230. metal connection plate;
240. first injection molding portion; 241. fourth groove;
250. metal liner; 251. second avoidance hole;
260. cylindrical reinforcing member; 270. third injection molding portion; 280. metal connection member; 290. adhesive injection port;
200c. sealing adhesive;
200d. sealing ring; 200e. sealing ring mounting seat;
300. circuit board; 310. electrical connection sub-board; 320. circuit board main body; and
400. reinforcing plate.

### DESCRIPTION OF EMBODIMENTS

To make the objectives, technical solutions, and advantages of this application clearer, the following clearly and completely describes the technical solutions of this application with reference to specific embodiments of this application and corresponding accompanying drawings. Apparently, the described embodiments are merely some but not all of the embodiments of this application.

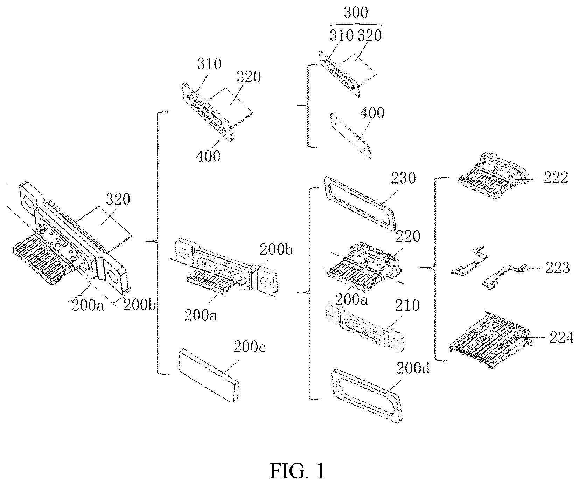

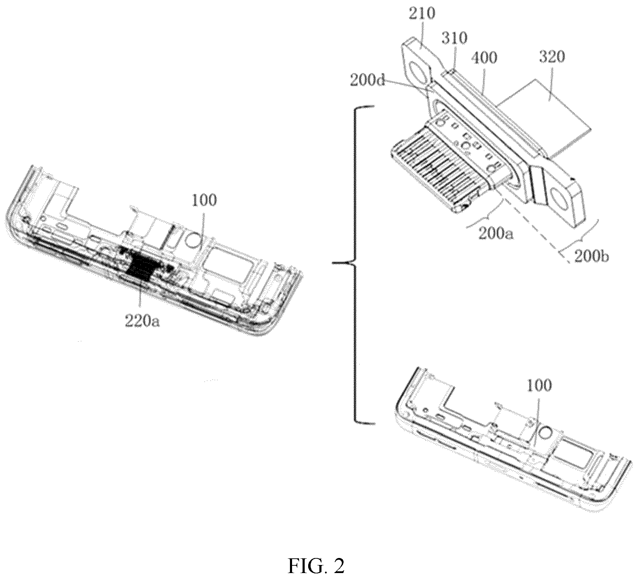

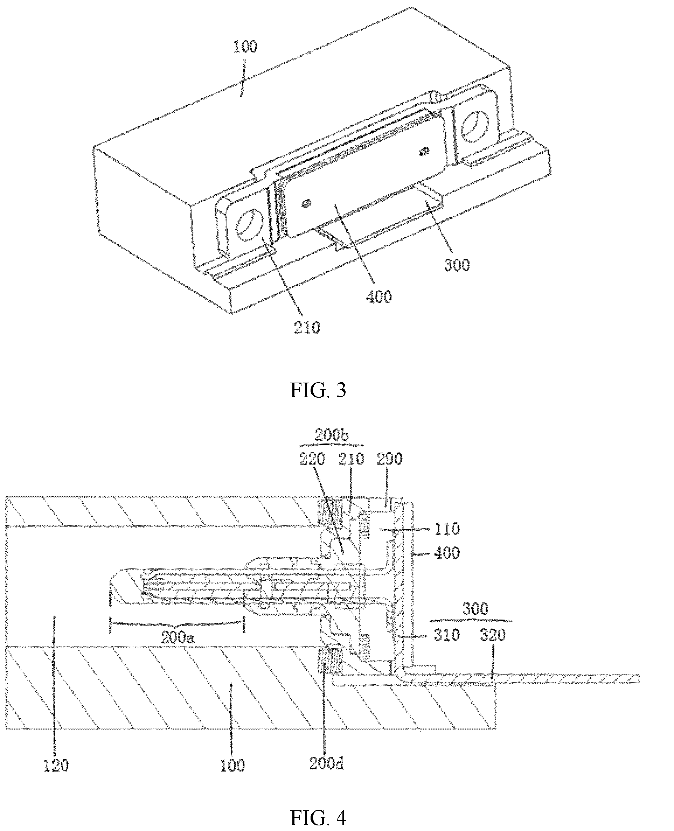

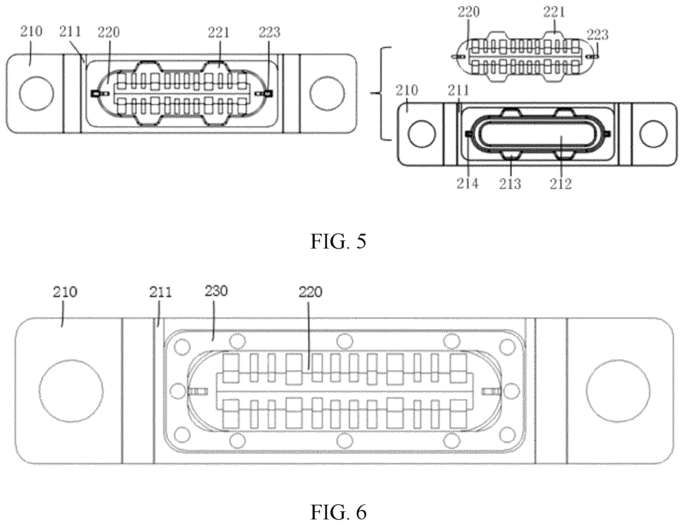

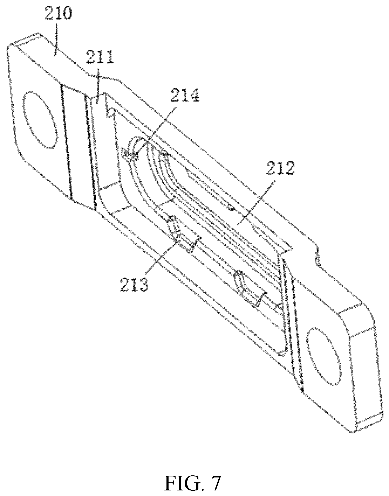

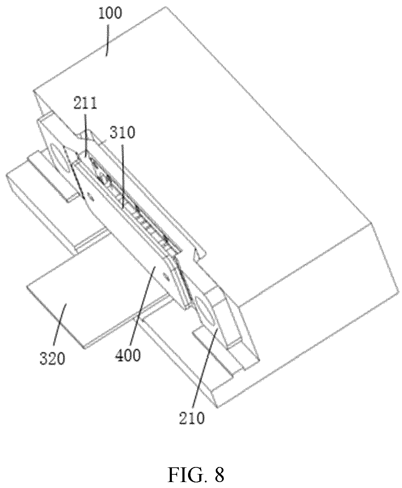

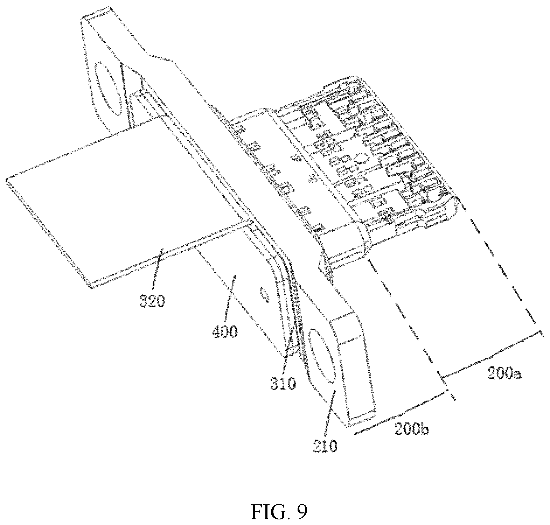

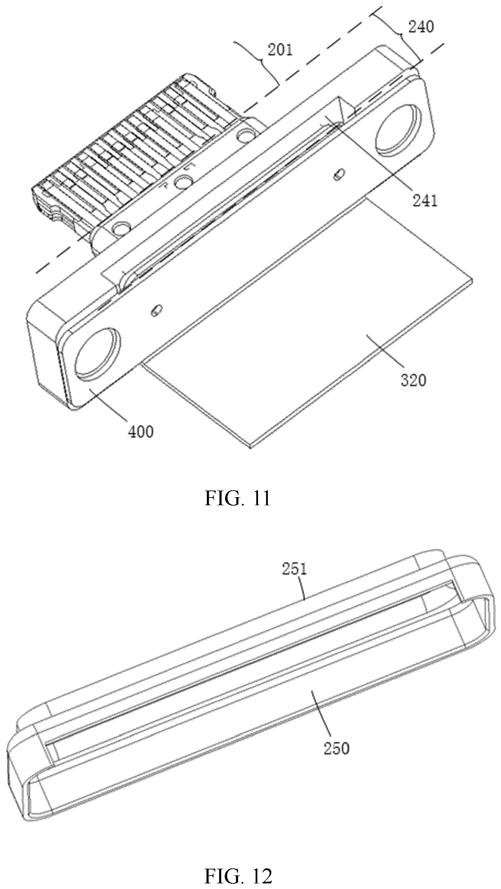

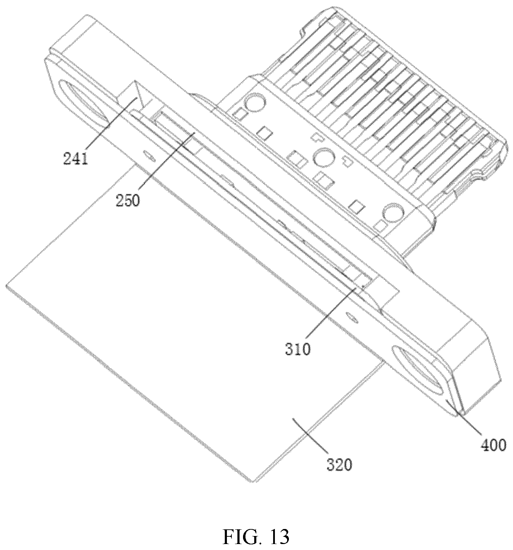

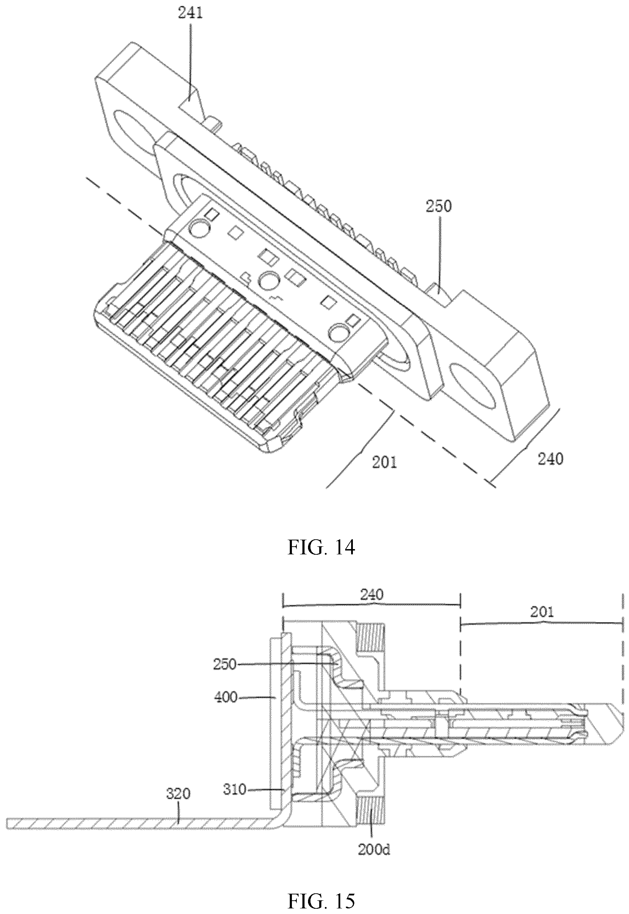

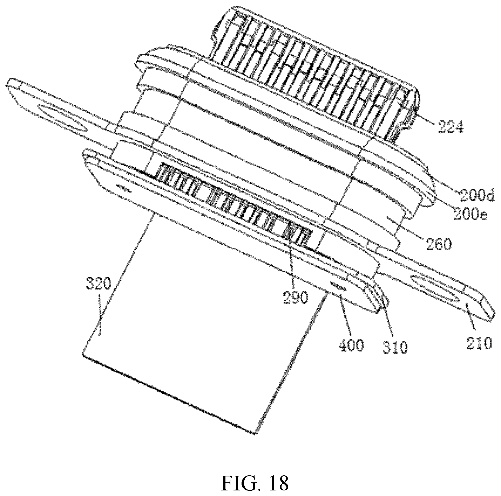

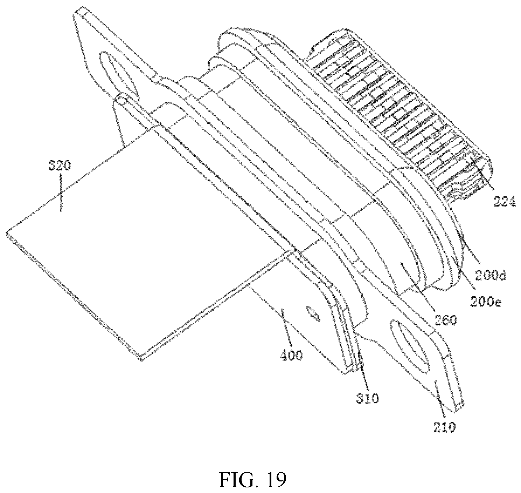

The technical solutions disclosed in the embodiments of this application are described in detail below with reference to FIGs. 1 to 21.

### Embodiment 1

Referring to FIGs. 1 to 9, an embodiment of this application discloses a connector, where the disclosed connector may be a Micro USB connector, a USB Type C connector, a Lightning connector, or the like. The disclosed connector includes a housing 100, a socket tongue 200a, a socket base 200b, and a circuit board 300.

The housing 100 is a foundation for mounting various components of the connector. The housing 100 is provided with an accommodating space 110 and an insertion hole 120 in communication with the accommodating space 110; the insertion hole 120 runs through a first end surface and a second end surface of the housing 100; the first end surface is opposite the second end surface; and the accommodating space 110 is arranged close to the second end surface. The first end surface may be an end into which an external plug extends when the external plug is in insertion fit with the connector.

A first end portion of the socket tongue 200a extends into the insertion hole 120 in a suspending manner. The external plug can enter through an opening of the insertion hole 120 located on the first end surface to be electrically connected to the socket tongue 200a. The socket base 200b is connected to a second end portion of the socket tongue 200a, and the socket base 200b is at least partially located in the accommodating space 110. The socket base 200b seals an opening, located on the second end surface, of the insertion hole 120, and the socket base 200b has a first electrical connection portion arranged facing away from the socket tongue 200a.

The circuit board 300 includes an electrical connection sub-board 310. The electrical connection sub-board 310 is provided with a second electrical connection portion. A surface of the electrical connection sub-board 310 provided with the second electrical connection portion faces the second end surface. The surface of the electrical connection sub-board 310 provided with the second electrical connection portion may be parallel to the second end surface. Certainly, an included angle may be formed between the surface of the electrical connection sub-board 310 provided with the second electrical connection portion and the second end surface, where the included angle is a small angle, for example, being less than 10 degrees or less than 5 degrees. The socket base 200b is located between the housing 100 and the electrical connection sub-board 310. The first electrical connection portion is electrically connected to the second electrical connection portion. The socket tongue 200a and the socket base 200b may be electrically connected to the circuit board 300 through the first electrical connection portion and the second electrical connection portion.

The connector disclosed in this embodiment of this application is configured to be a structure including the housing 100, the socket tongue 200a, the socket base 200b, and the circuit board, so that the housing 100 may be provided with the accommodating space 110 and the insertion hole 120 in communication with the accommodating space 110. The insertion hole 120 can run through the first end surface and second end surface of the housing 100, so that the socket base 200b can seal the opening of the insertion hole 120 located on the second end surface, thereby preventing external dirt such as dust from entering the accommodating space 110 and protecting components in the accommodating space 110. The socket base 200b is provided with the first electrical connection portion arranged facing away from the socket tongue 200a. The electrical connection sub-board 310 is provided with the surface opposite the second end surface, so that the second electrical connection portion may be disposed on the surface of the electrical connection sub-board 310 opposite the second end surface. Thus, this ensures the area of the surface required for provision of the second electrical connection portion in a case of ensuring the electrical connection stability between the first electrical connection portion and the second electrical connection portion, thereby ensuring the electrical connection stability between the first electrical connection portion and the second electrical connection portion without increasing the length of the socket base 200b extending toward the circuit board 300. As a result, the length of the socket base 200b extending toward the circuit board can be reduced, so that the space occupied by the connector can be reduced, thereby solving the problem in the related art that the length of the socket tongue extending toward the circuit board is increased to ensure the electrical connection stability between the socket tongue and the circuit board, which otherwise causes a large space occupied by a socket.

The first electrical connection portion and the second electrical connection portion are electrically connected to each other, so the first electrical connection portion and the second electrical connection portion need to be sealed for waterproofness. To seal the first electrical connection portion and the second electrical connection portion, optionally, the electrical connection sub-board 310 and the socket base 200b can enclose the accommodating space 110. The accommodating space 110 can be used for filling of a sealing adhesive 200c. The first electrical connection portion and the second electrical connection portion may be located in the accommodating space 110. An electrical connection position between the first electrical connection portion and the second electrical connection portion is located in the accommodating space 110. An adhesive injection port in communication with the accommodating space 110 may be formed between the electrical connection sub-board 310 and the socket base 200b, or the electrical connection sub-board 310 is provided with an adhesive injection port in communication with the accommodating space 110, or the socket base 200b is provided with an adhesive injection port in communication with the accommodating space 110.

In this embodiment of this application, the positional relationship where the surface of the electrical connection sub-board 310 provided with the second electrical connection portion faces the second end surface allows the electrical connection sub-board 310 and the socket base 200b to enclose the accommodating space 110, so that the first electrical connection portion and the second electrical connection portion can be disposed in the accommodating space 110. Thus, this allows the accommodating space 110 to protect the first electrical connection portion and the second electrical connection portion and can provide a place for filling of the sealing adhesive 200c, thereby allowing the first electrical connection portion and the second electrical connection portion to be sealed by the sealing adhesive 200c after filling the sealing adhesive 200c into the accommodating space 110 through the adhesive injection port.

Optionally, the sealing adhesive 200c can fill the accommodating space 110 and cover the first electrical connection portion and the second electrical connection portion. The socket base 200b and the electrical connection sub-board 310 are bonded and fixed by the sealing adhesive 200c. A side of the socket base 200b facing away from the socket tongue 200a is sealed and covered by the sealing adhesive 200c.

In this embodiment of this application, the sealing adhesive 200c fills the accommodating space 110 and covers the first electrical connection portion and the second electrical connection portion, so that the first electrical connection portion and the second electrical connection portion can be sealed by the sealing adhesive 200c, thereby achieving waterproofness of the first electrical connection portion and the second electrical connection portion. The socket base 200b and the electrical connection sub-board 310 are bonded and fixed by the sealing adhesive 200c, so that the socket base 200b and the electrical connection sub-board 310 can be connected to each other through the sealing adhesive 200c. The side of the socket base 200b facing away from the socket tongue 200a is sealed and covered by the sealing adhesive 200c, so that the sealing adhesive 200c can further seal the side of the socket base 200b facing away from the socket tongue 200a, thereby allowing the socket base 200b to well seal the insertion hole 120, and improving the waterproof performance of the connector.

In an optional embodiment, the socket base 200b may include a base fixing portion 210 and a base main body 220. The base fixing portion 210 may be connected to the housing 100. The socket base 200b is connected to the housing 100 through the base fixing portion 210. The base fixing portion 210 may be provided with a first groove 211 and a first avoidance hole 212. An opening of the first groove 211 and the socket tongue 200a may be respectively located on two sides of the socket base 200b facing away from each other. The first avoidance hole 212 may be formed in a bottom wall of the first groove 211. An end portion of the base main body 220 facing away from the socket tongue 200a is fixed in the first avoidance hole 212, thereby facilitating the installation of the base main body 220 and the base fixing portion 210. The end portion of the base main body 220 facing away from the socket tongue 200a may be detachably connected to the first avoidance hole 212. Certainly, the base main body 220 and the base fixing portion 210 may alternatively form an integrated structure. The base main body 220 and the base fixing portion 210 can together seal the opening of the insertion hole 120 located on the second end face. The first electrical connection portion may be disposed on the base main body 220, and the first electrical connection portion may be located in the first groove 211. The surface of the electrical connection sub-board 310 provided with the second electrical connection portion can cover the opening of the first groove 211. The second electrical connection portion may be located in the first groove 211. A surface of the base fixing portion 210 where the first groove 211 is formed may be a first surface. The electrical connection sub-board 310 and the first surface can enclose the accommodating space.

In this embodiment of this application, the socket base 200b is configured to be a structure including the base fixing portion 210 and the base main body 220, so that the base fixing portion 210 may be provided with the first groove 211, thereby allowing the surface of the base fixing portion 210 where the first groove 211 is formed and the electrical connection sub-board 310 to enclose the accommodating space 110. The base fixing portion 210 is provided for forming the first groove 211 so as to enclose the accommodating space 110 with the electrical connection sub-board 310, thereby avoiding reduction in the strength of a component such as the housing 100 or the circuit board 300 due to the provision of a groove on the component such as the housing 100 or the circuit board 300 for enclosing the accommodating space 110.

To allow for more stable connection between the base fixing portion 210 and the base main body 220, optionally, an edge of the base fixing portion 210 enclosing the first avoidance hole 212 may be provided with a second groove 213. The base main body 220 may include a first protrusion 221. The first protrusion 221 may be in location fit with the second groove 213 in a circumferential direction of the first avoidance hole 212. The edge of the base fixing portion 210 enclosing the first avoidance hole 212 is provided with the second groove 213, and the base main body 220 is provided with the first protrusion 221, so that the first protrusion 221 is in location fit with the second groove 213 in the circumferential direction of the first avoidance hole 212, so as to limit the locations of the base fixing portion 210 and the base main body 220 in the circumferential direction of the first avoidance hole 212, thereby allowing for more stable connection between the base fixing portion 210 and the base main body 220.

Further, the edge of the base fixing portion 210 enclosing the first avoidance hole 212 may be provided with a third groove 214. The base main body 220 may include a base body 222 and a terminal partition plate 223 partially disposed in the base body 222. The terminal partition plate 223 can provide effects such as shielding magnetic fields and electric fields for the base body 222 and a terminal strip 224 on the base body 222. A portion of the terminal partition plate 223 protruding from the base body 222 may be located in the third groove 214. The portion of the terminal partition plate 223 protruding from the base body 222 may be in location fit with the third groove 214 in the circumferential direction of the first avoidance hole 212. The base body 222 may be a plastic component and may be formed by injection molding.

The portion of the terminal partition plate 223 protruding from the base body 222 may be in location fit with the third groove 214 in the circumferential direction of the first avoidance hole 212, so that the connection stability between the base fixing portion 210 and the base main body 220 can be further improved. In addition, the terminal partition plate 223 is fully utilized, so that the terminal partition plate 223 not only has a shielding effect, but also has an effect of achieving location fit with the third groove 214 in the circumferential direction of the first avoidance hole 212, thereby allowing the terminal partition plate 223 to have multiple functions.

To allow the base main body 220 to be in limiting fit with the base fixing portion 210 in a direction of the opening of the first groove 211, optionally, the socket base 200b may further include a metal connection plate 230. The base fixing portion 210 may be a metal component. The metal connection plate 230 may be connected to the base fixing portion 210 through welding, and the metal connection plate 230 may be connected to the terminal partition plate 223 through welding. The base main body 220 may be in limiting fit with the metal connection plate 230 in the direction of the opening of the first groove 211. Specifically, at least a portion of the terminal partition plate 223 and at least a portion of the first protrusion 221 can be clamped between the base fixing portion 210 and the metal connection plate 230. The metal connection plate 230 is welded to the base fixing portion 210 and the terminal partition plate 223, so that the base main body 220 is in limiting fit with the base fixing portion 210 in the direction of the opening of the first groove 211, thereby improving the connection stability between the base main body 220 and the base fixing portion 210.

Optionally, a side wall of the first groove 211 is provided with an adhesive injection port 290 in communication with the first groove 211, and the adhesive injection port 290 may be in communication with the accommodating space 110. The first groove 211 of the base fixing portion 210 is provided with the adhesive injection port 290, helping to fill the sealing adhesive 200c into the accommodating space 110, and avoiding the provision of the adhesive injection port 290 in the housing 100 or the circuit board 300, thereby allowing for high strength of the housing 100 or the circuit board 300.

### Embodiment 2

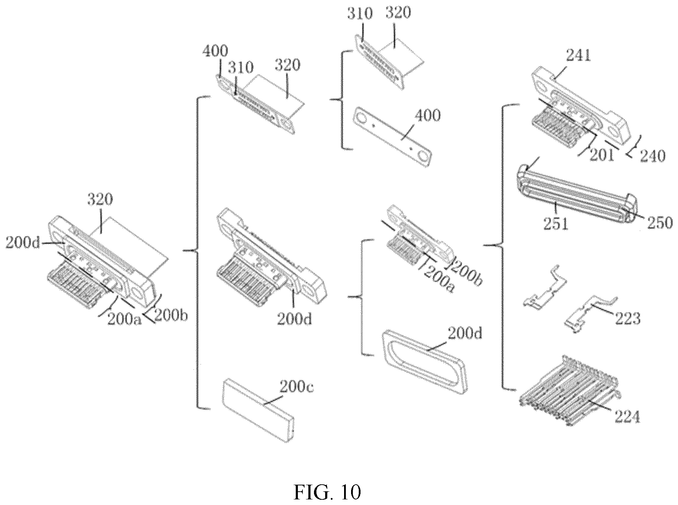

Referring to FIGs. 10 to 15, an embodiment of this application discloses a connector, where the disclosed connector may be a Micro USB connector, a USB Type C connector, a Lightning connector, or the like. The disclosed connector includes a housing 100, a socket tongue 200a, a socket base 200b, and a circuit board 300.

The housing 100 is a foundation for mounting various components of the connector. The housing 100 is provided with an accommodating space 110 and an insertion hole 120 in communication with the accommodating space 110; the insertion hole 120 runs through a first end surface and a second end surface of the housing 100; the first end surface is opposite the second end surface; and the accommodating space 110 is arranged close to the second end surface. The first end surface may be an end into which an external plug extends when the external plug is in insertion fit with the connector.

A first end portion of the socket tongue 200a extends into the insertion hole 120 in a suspending manner. The external plug can enter through an opening of the insertion hole 120 located on the first end surface to be electrically connected to the socket tongue 200a. The socket base 200b is connected to a second end portion of the socket tongue 200a, and the socket base 200b is at least partially located in the accommodating space 110. The socket base 200b seals an opening, located on the second end surface, of the insertion hole 120, and the socket base 200b has a first electrical connection portion arranged facing away from the socket tongue 200a.

The circuit board 300 includes an electrical connection sub-board 310. The electrical connection sub-board 310 is provided with a second electrical connection portion. A surface of the electrical connection sub-board 310 provided with the second electrical connection portion faces the second end surface. The surface of the electrical connection sub-board 310 provided with the second electrical connection portion may be parallel to the second end surface. Certainly, an included angle may be formed between the surface of the electrical connection sub-board 310 provided with the second electrical connection portion and the second end surface, where the included angle is a small angle, for example, being less than 10 degrees or less than 5 degrees. The socket base 200b is located between the housing 100 and the electrical connection sub-board 310. The first electrical connection portion is electrically connected to the second electrical connection portion. The socket tongue 200a and the socket base 200b may be electrically connected to the circuit board 300 through the first electrical connection portion and the second electrical connection portion.

The connector disclosed in this embodiment of this application is configured to be a structure including the housing 100, the socket tongue 200a, the socket base 200b, and the circuit board, so that the housing 100 may be provided with the accommodating space 110 and the insertion hole 120 in communication with the accommodating space 110. The insertion hole 120 can run through the first end surface and second end surface of the housing 100, so that the socket base 200b can seal the opening of the insertion hole 120 located on the second end surface, thereby preventing external dirt such as dust from entering the accommodating space 110 and protecting components in the accommodating space 110. The socket base 200b is provided with the first electrical connection portion arranged facing away from the socket tongue 200a. The electrical connection sub-board 310 is provided with the surface opposite the second end surface, so that the second electrical connection portion may be disposed on the surface of the electrical connection sub-board 310 opposite the second end surface. Thus, this ensures the area of the surface required for provision of the second electrical connection portion in a case of ensuring the electrical connection stability between the first electrical connection portion and the second electrical connection portion, thereby ensuring the electrical connection stability between the first electrical connection portion and the second electrical connection portion without increasing the length of the socket base 200b extending toward the circuit board 300. As a result, the length of the socket base 200b extending toward the circuit board can be reduced, so that the space occupied by the connector can be reduced, thereby solving the problem in the related art that the length of the socket tongue extending toward the circuit board is increased to ensure the electrical connection stability between the socket tongue and the circuit board, which otherwise causes a large space occupied by a socket.

The first electrical connection portion and the second electrical connection portion are electrically connected to each other, so the first electrical connection portion and the second electrical connection portion need to be sealed for waterproofness. To seal the first electrical connection portion and the second electrical connection portion, optionally, the electrical connection sub-board 310 and the socket base 200b can enclose the accommodating space 110. The accommodating space 110 can be used for filling of a sealing adhesive 200c. The first electrical connection portion and the second electrical connection portion may be located in the accommodating space 110. An electrical connection position between the first electrical connection portion and the second electrical connection portion is located in the accommodating space 110. An adhesive injection port in communication with the accommodating space 110 may be formed between the electrical connection sub-board 310 and the socket base 200b, or the electrical connection sub-board 310 is provided with an adhesive injection port in communication with the accommodating space 110, or the socket base 200b is provided with an adhesive injection port in communication with the accommodating space 110.

In this embodiment of this application, the positional relationship where the surface of the electrical connection sub-board 310 provided with the second electrical connection portion faces the second end surface allows the electrical connection sub-board 310 and the socket base 200b to enclose the accommodating space 110, so that the first electrical connection portion and the second electrical connection portion can be disposed in the accommodating space 110. Thus, this allows the accommodating space 110 to protect the first electrical connection portion and the second electrical connection portion and can provide a place for filling of the sealing adhesive 200c, thereby allowing the first electrical connection portion and the second electrical connection portion to be sealed by the sealing adhesive 200c after filling the sealing adhesive 200c into the accommodating space 110 through the adhesive injection port.

In an optional embodiment, the socket base 200b may include a first injection molding portion 240. The socket tongue 200a may include a second injection molding portion 201. The first injection molding portion 240 and the second injection molding portion 201 may form an integrated injection molding structure. The first injection molding portion 240 may be connected to the housing 100, and the first injection molding portion 240 may be provided with a fourth groove 241. An opening of the fourth groove 241 and the socket tongue 200a are respectively located on two sides of the socket base 200b facing away from each other. The first electrical connection portion is disposed on the first injection molding portion 240 and located in the fourth groove 241. The surface of the electrical connection sub-board 310 provided with the second electrical connection portion can cover the opening of the fourth groove 241. The second electrical connection portion may be located in the fourth groove 241. A surface of the first injection molding portion 240 where the fourth groove 241 is formed may be a second surface. The electrical connection sub-board 310 and the second surface can enclose the accommodating space 110. The first injection molding portion 240 or the electrical connection sub-board 310 may be provided with the adhesive injection port 290 in communication with the accommodating space 110.

In this embodiment of this application, the socket base 200b is configured to include the first injection molding portion 240, and the socket tongue 200a is configured to include the second injection molding portion 201, so that the first injection molding portion 240 and the second injection molding portion 201 form the integrated injection molding structure. Thus, this can improve the overall strength of the socket base 200b and the socket tongue 200a, thereby allowing the first injection molding portion 240 to still have high strength after the provision of the fourth groove 241 on the first injection molding portion 240. The surface of the first injection molding portion 240 where the fourth groove 241 is formed may be the second surface and encloses the accommodating space 110 together with the electrical connection sub-board 310, so that the first electrical connection portion and the second electrical connection portion may be located in the accommodating space, thereby protecting the first electrical connection portion and the second electrical connection portion, and helping to fill the sealing adhesive 200c into the accommodating space 110.

To further improve the strength of the socket base 200b, optionally, the fourth groove 241 may be a through groove. The socket base 200b may further include a metal liner 250, where the metal liner 250 may be connected to the first injection molding portion 240 through injection molding, the metal liner 250 may be at least partially disposed in the fourth groove 241, and the metal liner 250 may be provided with a second avoidance hole 251. The first electrical connection portion can pass through the second avoidance hole 251 to extend into the accommodating space. The electrical connection sub-board 310 and a first port of the fourth groove 241 may enclose a first orifice, and the metal liner 250 can seal the first orifice. The electrical connection sub-board 310 and a second port of the fourth groove 241 may enclose a second orifice, and the second orifice may be the adhesive injection port 290 in communication with the accommodating space.

The metal liner 250 is provided, the metal liner 250 may be connected to the first injection molding portion 240 through injection molding, and the metal liner 250 may be at least partially disposed in the fourth groove 241, so that the metal liner 250 can further improve the strength of the socket base 200b. The fourth groove 241 is configured to be a through groove, facilitating processing, thereby allowing the metal liner 250 to seal the first orifice enclosed by the electrical connection sub-board 310 and the first port of the fourth groove 241. The electrical connection sub-board 310 and the second port of the fourth groove 241 enclose the adhesive injection port 290 in communication with the accommodating space, thereby helping to fill the sealing adhesive 200c into the accommodating space 110.

### Embodiment 3

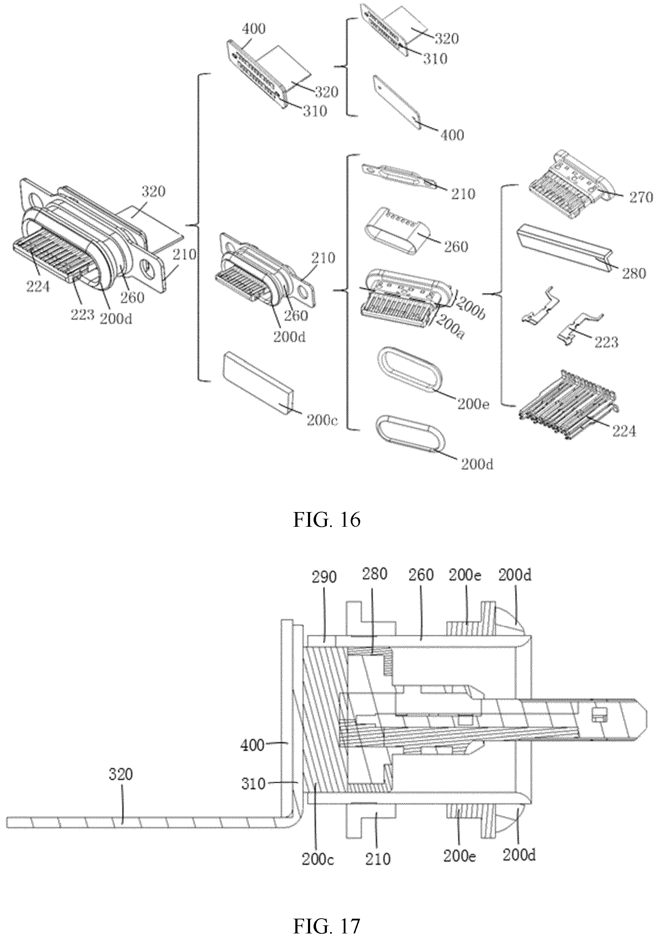

### Referring to FIGs. 16 to 19, an embodiment of this application discloses a connector, where the disclosed connector may be a Micro USB connector, a USB Type C connector, a Lightning connector, or the like. The disclosed connector includes a housing 100, a socket tongue 200a, a socket base 200b, and a circuit board 300.

The housing 100 is a foundation for mounting various components of the connector. The housing 100 is provided with an accommodating space 110 and an insertion hole 120 in communication with the accommodating space 110; the insertion hole 120 runs through a first end surface and a second end surface of the housing 100; the first end surface is opposite the second end surface; and the accommodating space 110 is arranged close to the second end surface. The first end surface may be an end into which an external plug extends when the external plug is in insertion fit with the connector.

A first end portion of the socket tongue 200a extends into the insertion hole 120 in a suspending manner. The external plug can enter through an opening of the insertion hole 120 located on the first end surface to be electrically connected to the socket tongue 200a. The socket base 200b is connected to a second end portion of the socket tongue 200a, and the socket base 200b is at least partially located in the accommodating space 110. The socket base 200b seals an opening, located on the second end surface, of the insertion hole 120, and the socket base 200b has a first electrical connection portion arranged facing away from the socket tongue 200a.

The circuit board 300 includes an electrical connection sub-board 310. The electrical connection sub-board 310 is provided with a second electrical connection portion. A surface of the electrical connection sub-board 310 provided with the second electrical connection portion faces
the second end surface. The surface of the electrical connection sub-board 310 provided with the second electrical connection portion may be parallel to the second end surface. Certainly, an included angle may be formed between the surface of the electrical connection sub-board 310 provided with the second electrical connection portion and the second end surface, where the included angle is a small angle, for example, being less than 10 degrees or less than 5 degrees. The socket base 200b is located between the housing 100 and the electrical connection sub-board 310. The first electrical connection portion is electrically connected to the second electrical connection portion. The socket tongue 200a and the socket base 200b may be electrically connected to the circuit board 300 through the first electrical connection portion and the second electrical connection portion.

The connector disclosed in this embodiment of this application is configured to be a structure including the housing 100, the socket tongue 200a, the socket base 200b, and the circuit board, so that the housing 100 may be provided with the accommodating space 110 and the insertion hole 120 in communication with the accommodating space 110. The insertion hole 120 can run through the first end surface and second end surface of the housing 100, so that the socket base 200b can seal the opening of the insertion hole 120 located on the second end surface, thereby preventing external dirt such as dust from entering the accommodating space 110 and protecting components in the accommodating space 110. The socket base 200b is provided with the first electrical connection portion arranged facing away from the socket tongue 200a. The electrical connection sub-board 310 is provided with the surface opposite the second end surface, so that the second electrical connection portion may be disposed on the surface of the electrical connection sub-board 310 opposite the second end surface. Thus, this ensures the area of the surface required for provision of the second electrical connection portion in a case of ensuring the electrical connection stability between the first electrical connection portion and the second electrical connection portion, thereby ensuring the electrical connection stability between the first electrical connection portion and the second electrical connection portion without increasing the length of the socket base 200b extending toward the circuit board 300. As a result, the length of the socket base 200b extending toward the circuit board can be reduced, so that the space occupied by the connector can be reduced, thereby solving the problem in the related art that the length of the socket tongue extending toward the circuit board is increased to ensure the electrical connection stability between the socket tongue and the circuit board, which otherwise causes a large space occupied by a socket.

The first electrical connection portion and the second electrical connection portion are electrically connected to each other, so the first electrical connection portion and the second electrical connection portion need to be sealed for waterproofness. To seal the first electrical connection portion and the second electrical connection portion, optionally, the electrical connection sub-board 310 and the socket base 200b can enclose the accommodating space 110. The accommodating space 110 can be used for filling of a sealing adhesive 200c. The first electrical connection portion and the second electrical connection portion may be located in the accommodating space 110. An electrical connection position between the first electrical connection portion and the second electrical connection portion is located in the accommodating space 110. An adhesive injection port in communication with the accommodating space 110 may be formed between the electrical connection sub-board 310 and the socket base 200b, or the electrical connection sub-board 310 is provided with an adhesive injection port in communication with the accommodating space 110, or the socket base 200b is provided with an adhesive injection port in communication with the accommodating space 110.

In this embodiment of this application, the positional relationship where the surface of the electrical connection sub-board 310 provided with the second electrical connection portion faces the second end surface allows the electrical connection sub-board 310 and the socket base 200b to enclose the accommodating space 110, so that the first electrical connection portion and the second electrical connection portion can be disposed in the accommodating space 110. Thus, this allows the accommodating space 110 to protect the first electrical connection portion and the second electrical connection portion and can provide a place for filling of the sealing adhesive 200c, thereby allowing the first electrical connection portion and the second electrical connection portion to be sealed by the sealing adhesive 200c after filling the sealing adhesive 200c into the accommodating space 110 through the adhesive injection port.

In an optional embodiment, the socket base 200b may include a cylindrical reinforcing member 260 and a third injection molding portion 270. The third injection molding portion 270 may be at least partially disposed in the cylindrical reinforcing member 260. The cylindrical reinforcing member 260 may be provided with an avoidance notch. The third injection molding portion 270 may be provided with a fifth groove. An opening of the fifth groove and the socket tongue 200a may be located on two sides of the socket base 200b facing away from each other. The first electrical connection portion may be disposed on the third injection molding portion 270 and located in the fifth groove. The surface of the electrical connection sub-board 310 provided with the second electrical connection portion can cover the opening of the fifth groove. The second electrical connection portion may be located in the fifth groove. A surface of the third injection molding portion 270 where the fifth groove is formed may be a third surface. The electrical connection sub-board 310 and the third surface can enclose the accommodating space 110. The electrical connection sub-board 310 and the avoidance notch can enclose the adhesive injection port 290. The adhesive injection port 290 may be in communication with the accommodating space.

In this embodiment of this application, the socket base 200b is configured to include the cylindrical reinforcing member 260 and the third injection molding portion 270, so that the third injection molding portion 270 may be at least partially disposed in the cylindrical reinforcing member 260. The cylindrical reinforcing member 260 can protect the third injection molding portion 270 and can reinforce the overall socket base 200b. The third injection molding portion 270 is provided with the fifth groove, so that the first electrical connection portion and the second electrical connection portion may be disposed in the fifth groove. Thus, the electrical connection sub-board 310 and the third surface being the surface of the third injection molding portion 270 where the fifth groove is formed can enclose the accommodating space 110, so that the first electrical connection portion and the second electrical connection portion may be disposed in the accommodating space 110, thereby sealing the first electrical connection portion and the second electrical connection portion after filling the sealing adhesive 200 through the adhesive injection port 290 enclosed by the electrical connection sub-board 310 and the avoidance notch.

To facilitate the connection between the cylindrical reinforcing member 260 and the third injection molding portion 270, optionally, the cylindrical reinforcing member 260 may be a metal structural member. The socket base 200b may further include a metal connection member 280, where the metal connection member 280 may be connected to the third injection molding portion 270 through injection molding, and the metal connection member 280 may be connected to the cylindrical reinforcing member 260 through welding. The metal connection member 280 is provided, and the cylindrical reinforcing member 260 is configured to be the metal structural member, so that the metal connection member 280 may be connected to the third injection molding portion 270 through injection molding, and the metal connection member 280 may be connected to the cylindrical reinforcing member 260 through welding, thereby facilitating the connection between the cylindrical reinforcing member 260 and the third injection molding portion 270.

Optionally, the connector may include a base fixing portion 210. The base fixing portion 210 may fit around the cylindrical reinforcing member 260. The cylindrical reinforcing member 260 may be connected to the housing 100 through the base fixing portion 210.

In some embodiments, the circuit board 300 may be a flexible circuit board. The circuit board 300 may further include a circuit board main body 320. The electrical connection sub-board 310 may be perpendicular to the circuit board main body 320 and forms a bent structure. The circuit board 300 is configured to be the flexible circuit board, and the circuit board 300 may further include the circuit board main body 320, so that the electrical connection sub-board 310 may be perpendicular to the circuit board main body 320 and forms the bent structure, thereby facilitating the arrangement of the circuit board 300 and the thinning of an electronic device when the connector is disposed in the electronic device.

Optionally, the electrical connection sub-board 310 may be perpendicular to the socket tongue 200a. The electrical connection sub-board 310 is configured to be perpendicular to the socket tongue 200a, so that an entirety formed by the electrical connection sub-board 310 and the socket tongue 200a is relatively neat, thereby facilitating the assembly with other devices.

To improve the connection strength between the electrical connection sub-board 310 and the socket base 200b, optionally, the connector may further include a reinforcing plate 400. The reinforcing plate 400 may be attached to a second board surface of the electrical connection sub-board 310 facing away from the socket base 200b, and the reinforcing plate 400 may be connected to the socket base 200b. In an embodiment where the socket base 200b includes a base fixing portion 210 and a base main body 220, the reinforcing plate 400 may be connected to the base fixing portion 210. The provision of the reinforcing plate 400 provided allows for higher connection strength between the electrical connection sub-board 310 and the socket base 200b.

Optionally, the connector may further include a sealing ring 200d. The sealing ring 200d may be arranged around the socket tongue 200a and may be clamped and fixed between the second end surface and the socket base 200b. The socket base 200b may be in sealing fit with the second end surface through the sealing ring 200d, thereby improving the sealing of the socket base 200b on the opening of the insertion hole 120 located on the second end surface.

The connector may further include a sealing ring mounting seat 200e. The sealing ring mounting seat 200e may be mounted on the cylindrical reinforcing member 260. The sealing ring 200d may be mounted on the sealing ring mounting seat 200e.

In some embodiments, since the socket base 200b seals the opening of the insertion hole 120 located on the second end surface, when the external plug is plugged into the opening of the insertion hole 120 located on the first end surface, an end portion of the external plug can abut against the socket base 200b, thereby limiting the movement of the external plug.

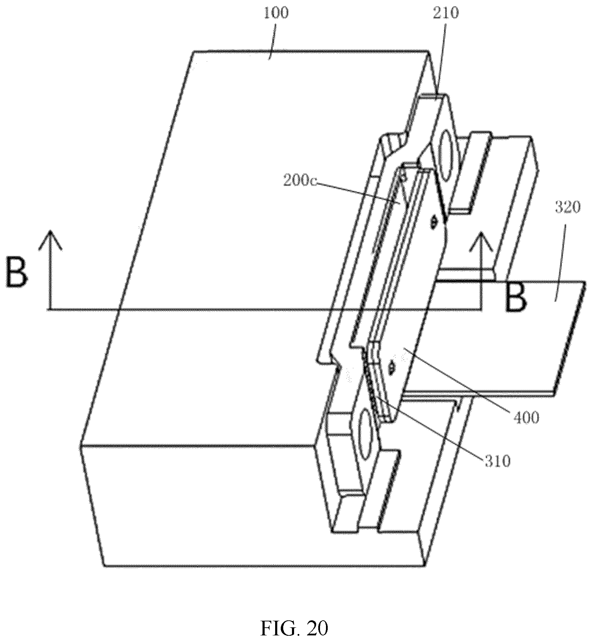

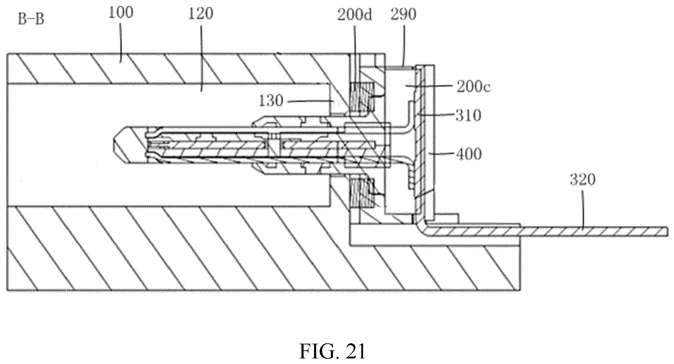

To avoid the loosening of the connection between the socket base 200b and the housing 100 due to the frequent abutment of the end portion of the external plug against the socket base 200b, optionally, referring to FIGs. 20 and 21, the housing 100 may be provided with an abutment protrusion 130. The abutment protrusion 130 may be disposed in the insertion hole 120 and located adjacent to the second end surface. The abutment protrusion 130 is configured to abut against the end portion of the external plug so as to limit the external plug when the external plug is inserted into the insertion hole. With the abutment protrusion 130 provided, the abutment protrusion 130 can abut against the end portion of the external plug to limit the external plug when the external plug is inserted into the insertion hole, thereby avoiding the abutment of the end portion of the external plug against the socket base 200b, and solving the problem of the loosening of the connection between the socket base 200b and the housing 100 due to the frequent abutment of the end portion of the external plug against the socket base 200b.

This application further discloses an electronic device. The disclosed electronic device includes the connector according to the foregoing embodiments. The electronic device disclosed in the embodiments of this application uses the connector according to the foregoing embodiments. Since the connector according to the foregoing embodiments can reduce the occupied space, the space occupied by the connector in the electronic device is relatively reduced. This is conducive to lightness and thinness of the electronic device and can also provide more installation space for other components of the electronic device.

The electronic device disclosed in the embodiments of this application may be a mobile phone, a tablet, a game console, or the like.

The foregoing embodiments of this application focus on the differences between the embodiments. As long as the different features of improvement in the embodiments are not contradictory, they can be combined to form a more preferred embodiment. For brevity, details are not repeated here.

The foregoing describes the embodiments of this application with reference to the accompanying drawings. However, this application is not limited to the foregoing specific implementations. The foregoing specific implementations are merely illustrative rather than restrictive. Inspired by this application, persons of ordinary skill in the art may develop many other forms without departing from the protection scope of the claims.

## Claims

1. A connector, comprising a housing (100), a socket tongue (200a), a socket base (200b), and a circuit board (300), wherein
the housing (100) is provided with an accommodating space (110) and an insertion hole (120) in communication with the accommodating space (110); the insertion hole (120) runs through a first end surface and a second end surface of the housing (100); the first end surface is opposite the second end surface; and the accommodating space (110) is arranged close to the second end surface;
a first end portion of the socket tongue (200a) extends into the insertion hole (120) in a suspending manner; and the socket base (200b) is connected to a second end portion of the socket tongue (200a), the socket base (200b) is at least partially located in the accommodating space (110), the socket base (200b) seals an opening, located on the second end surface, of the insertion hole (120), and the socket base (200b) has a first electrical connection portion arranged facing away from the socket tongue (200a); and
the circuit board (300) comprises an electrical connection sub-board (310), and the electrical connection sub-board (310) and the socket base (200b) enclose the accommodating space (110); the electrical connection sub-board (310) is provided with a second electrical connection portion; a surface of the electrical connection sub-board (310) provided with the second electrical connection portion faces the second end surface; the socket base (200b) is located between the housing (100) and the electrical connection sub-board (310); and the first electrical connection portion is electrically connected to the second electrical connection portion; wherein
the socket base (200b) comprises a base fixing portion (210) and a base main body (220); the base fixing portion (210) is connected to the housing (100), and the base fixing portion (210) is provided with a first groove (211) and a first avoidance hole (212); an opening of the first groove (211) and the socket tongue (200a) are respectively located on two sides of the socket base (200b) facing away from each other; the first avoidance hole (212) is formed in a bottom wall of the first groove (211); an end portion of the base main body (220) facing away from the socket tongue (200a) is fixed in the first avoidance hole (212); and the first electrical connection portion is disposed on the base main body (220), and the first electrical connection portion is located in the first groove (211); and
the surface of the electrical connection sub-board (310) provided with the second electrical connection portion covers the opening of the first groove (211); the second electrical connection portion is located in the first groove (211); a surface of the base fixing portion (210) where the first groove (211) is formed is a first surface; and the electrical connection sub-board (310) and the first surface enclose the accommodating space (110);
**characterized in that**
the edge of the base fixing portion (210) enclosing the first avoidance hole (212) is provided with a third groove (214); the base main body (220) comprises a base body (222) and a terminal partition plate (223) partially disposed in the base body (222); and a portion of the terminal partition plate (223) protruding from the base body (222) is in location fit with the third groove (214) in the circumferential direction of the first avoidance hole (212).

2. The connector according to claim 1, wherein the accommodating space (110) is used for filling of a sealing adhesive (200c); the first electrical connection portion and the second electrical connection portion are located in the accommodating space (110); and an adhesive injection port (290) in communication with the accommodating space (110) is formed between the electrical connection sub-board (310) and the socket base (200b); or
the electrical connection sub-board (310) or the socket base (200b) is provided with an adhesive injection port (290) in communication with the accommodating space (110).

3. The connector according to claim 2, wherein the sealing adhesive (200c) fills the accommodating space (110) and covers the first electrical connection portion and the second electrical connection portion; the socket base (200b) and the electrical connection sub-board (310) are bonded and fixed by the sealing adhesive (200c); and a side of the socket base (200b) facing away from the socket tongue (200a) is sealed and covered by the sealing adhesive (200c).

4. The connector according to claim 1, wherein an edge of the base fixing portion (210) enclosing the first avoidance hole (212) is provided with a second groove (213); the base main body (220) comprises a first protrusion (221); and the first protrusion (221) is in location fit with the second groove (213) in a circumferential direction of the first avoidance hole (212).

5. The connector according to claim 1, wherein the socket base (200b) further comprises a metal connection plate (230); the base fixing portion (210) is a metal component; the metal connection plate (230) is connected to the base fixing portion (210) through welding, and the metal connection plate (230) is connected to the terminal partition plate (223) through welding; and the base main body (220) is in limiting fit with the metal connection plate (230) in a direction of the opening of the first groove (211).

6. The connector according to claim 1, wherein a side wall of the first groove (211) is provided with an adhesive injection port (290) in communication with the first groove (211); and the adhesive injection port (290) is in communication with the accommodating space.

7. The connector according to claim 1, wherein the circuit board (300) is a flexible circuit board, and the circuit board (300) further comprises a circuit board main body (320); and the electrical connection sub-board (310) is perpendicular to the circuit board main body (320) and forms a bent structure; and/or
the electrical connection sub-board (310) is perpendicular to the socket tongue (200a).

8. An electronic device, comprising the connector according to any one of claims 1 to 7.

## Patentansprüche

1. Ein Verbinder, der ein Gehäuse (100), eine Buchsenzunge (200a), eine Buchsenbasis (200b) und eine Leiterplatte (300) beinhaltet, wobei
das Gehäuse (100) mit einem Aufnahmeraum (110) und einem mit dem Aufnahmeraum (110) in Verbindung stehenden Einführloch (120) versehen ist; das Einführloch (120) durch eine erste Endoberfläche und eine zweite Endoberfläche des Gehäuses (100) hindurch verläuft; die erste Endoberfläche der zweiten Endoberfläche gegenüberliegt; und der Aufnahmeraum (110) nahe der zweiten Endoberfläche angeordnet ist;
ein erster Endabschnitt der Buchsenzunge (200a) frei in das Einführloch (120) hineinragt; und die Buchsenbasis (200b) mit einem zweiten Endabschnitt der Buchsenzunge (200a) verbunden ist, die Buchsenbasis (200b) sich mindestens teilweise in dem Aufnahmeraum (110) befindet, die Buchsenbasis (200b) eine an der zweiten Endoberfläche befindliche Öffnung des Einführlochs (120) abdichtet und die Buchsenbasis (200b) einen ersten elektrischen Verbindungsabschnitt, der von der Buchsenzunge (200a) abgewandt angeordnet ist, aufweist; und
die Leiterplatte (300) eine Teilleiterplatte (310) zur elektrischen Verbindung beinhaltet und die Teilleiterplatte (310) zur elektrischen Verbindung und die Buchsenbasis (200b) den Aufnahmeraum (110) umschließen; die Teilleiterplatte (310) zur elektrischen Verbindung mit einem zweiten elektrischen Verbindungsabschnitt versehen ist; eine Oberfläche der Teilleiterplatte (310) zur elektrischen Verbindung, die mit dem zweiten elektrischen Verbindungsabschnitt versehen ist, der zweiten Endoberfläche zugewandt ist; die Buchsenbasis (200b) sich zwischen dem Gehäuse (100) und der Teilleiterplatte (310) zur elektrischen Verbindung befindet; und der erste elektrische Verbindungsabschnitt elektrisch mit dem zweiten elektrischen Verbindungsabschnitt verbunden ist; wobei
die Buchsenbasis (200b) einen Basisbefestigungsabschnitt (210) und einen Basishauptkörper (220) beinhaltet;
der Basisbefestigungsabschnitt (210) mit dem Gehäuse (100) verbunden ist und der Basisbefestigungsabschnitt (210) mit einer ersten Vertiefung (211) und einer ersten Freistellungsöffnung (212) versehen ist; eine Öffnung der ersten Vertiefung (211) und die Buchsenzunge (200a) sich jeweils auf zwei voneinander abgewandten Seiten der Buchsenbasis (200b) befinden; die erste Freistellungsöffnung (212) in einer Bodenwand der ersten Vertiefung (211) gebildet ist; ein von der Buchsenzunge (200a) abgewandter Endabschnitt des Basishauptkörpers (220) in der ersten Freistellungsöffnung (212) befestigt ist; und der erste elektrische Verbindungsabschnitt auf dem Basishauptkörper (220) platziert ist und der erste elektrische Verbindungsabschnitt sich in der ersten Vertiefung (211) befindet; und
die Oberfläche der Teilleiterplatte (310) zur elektrischen Verbindung, die mit dem zweiten elektrischen Verbindungsabschnitt versehen ist, die Öffnung der ersten Vertiefung (211) abdeckt; der zweite elektrische Verbindungsabschnitt sich in der ersten Vertiefung (211) befindet; eine Oberfläche des Basisbefestigungsabschnitts (210), an der die erste Vertiefung (211) gebildet ist, eine erste Oberfläche ist; und die Teilleiterplatte (310) zur elektrischen Verbindung und die erste Oberfläche den Aufnahmeraum (110) umschließen;
**dadurch gekennzeichnet, dass**
der Rand des Basisbefestigungsabschnitts (210), der die erste Freistellungsöffnung (212) umschließt, mit einer dritten Vertiefung (214) versehen ist; der Basishauptkörper (220) einen Basiskörper (222) und eine teilweise in dem Basiskörper (222) platzierte Anschlusstrennplatte (223) beinhaltet; und ein von dem Basiskörper (222) vorstehender Abschnitt der Anschlusstrennplatte (223) in der Umfangsrichtung der ersten Freistellungsöffnung (212) positionierend mit der dritten Vertiefung (214) zusammenwirkt.

2. Verbinder gemäß Anspruch 1, wobei der Aufnahmeraum (110) zum Einfüllen eines Dichtklebstoffs (200c) verwendet wird; der erste elektrische Verbindungsabschnitt und der zweite elektrische Verbindungsabschnitt sich in dem Aufnahmeraum (110) befinden; und eine mit dem Aufnahmeraum (110) in Verbindung stehende Klebstoffeinspritzdurchlassöffnung (290) zwischen der Teilleiterplatte (310) zur elektrischen Verbindung und der Buchsenbasis (200b) gebildet ist; oder
die Teilleiterplatte (310) zur elektrischen Verbindung oder die Buchsenbasis (200b) mit einer mit dem Aufnahmeraum (110) in Verbindung stehenden Klebstoffeinspritzdurchlassöffnung (290) versehen ist.

3. Verbinder gemäß Anspruch 2, wobei der Dichtklebstoff (200c) den Aufnahmeraum (110) füllt und den ersten elektrischen Verbindungsabschnitt und den zweiten elektrischen Verbindungsabschnitt abdeckt; die Buchsenbasis (200b) und die Teilleiterplatte (310) zur elektrischen Verbindung durch den Dichtklebstoff (200c) verklebt und befestigt sind; und eine von der Buchsenzunge (200a) abgewandte Seite der Buchsenbasis (200b) durch den Dichtklebstoff (200c) abgedichtet und abgedeckt ist.

4. Verbinder gemäß Anspruch 1, wobei ein Rand des Basisbefestigungsabschnitts (210), der die erste Freistellungsöffnung (212) umschließt, mit einer zweiten Vertiefung (213) versehen ist; der Basishauptkörper (220) einen ersten Vorsprung (221) beinhaltet; und der erste Vorsprung (221) in einer Umfangsrichtung der ersten Freistellungsöffnung (212) positionierend mit der zweiten Vertiefung (213) zusammenwirkt.

5. Verbinder gemäß Anspruch 1, wobei die Buchsenbasis (200b) ferner eine Metallverbindungsplatte (230) beinhaltet; der Basisbefestigungsabschnitt (210) ein Metallbauteil ist; die Metallverbindungsplatte (230) durch Schweißen mit dem Basisbefestigungsabschnitt (210) verbunden ist und die Metallverbindungsplatte (230) durch Schweißen mit der Anschlusstrennplatte (223) verbunden ist; und der Basishauptkörper (220) in einer Richtung der Öffnung der ersten Vertiefung (211) begrenzend mit der Metallverbindungsplatte (230) zusammenwirkt.

6. Verbinder gemäß Anspruch 1, wobei eine Seitenwand der ersten Vertiefung (211) mit einer mit der ersten Vertiefung (211) in Verbindung stehenden Klebstoffeinspritzdurchlassöffnung (290) versehen ist; und die Klebstoffeinspritzdurchlassöffnung (290) mit dem Aufnahmeraum in Verbindung steht.

7. Verbinder gemäß Anspruch 1, wobei die Leiterplatte (300) eine flexible Leiterplatte ist und die Leiterplatte (300) ferner einen Leiterplattenhauptkörper (320) beinhaltet; und die Teilleiterplatte (310) zur elektrischen Verbindung senkrecht zu dem Leiterplattenhauptkörper (320) ist und eine gebogene Struktur bildet; und/oder die Teilleiterplatte (310) zur elektrischen Verbindung senkrecht zu der Buchsenzunge (200a) ist.

8. Eine elektronische Vorrichtung, die den Verbinder gemäß einem der Ansprüche 1 bis 7 beinhaltet.

## Revendications

1. Un connecteur, comprenant un boîtier (100), une languette de douille (200a), une base de douille (200b), et une carte de circuit imprimé (300), dans lequel le boîtier (100) est pourvu d'un espace de logement (110) et d'un trou d'insertion (120) en communication avec l'espace de logement (110) ; le trou d'insertion (120) traverse une première surface d'extrémité et une deuxième surface d'extrémité du boîtier (100) ; la première surface d'extrémité est opposée à la deuxième surface d'extrémité ; et l'espace de logement (110) est agencé à proximité de la deuxième surface d'extrémité ; une première partie d'extrémité de la languette de douille (200a) s'étend jusque dans le trou d'insertion (120) de manière suspendue ; et la base de douille (200b) est connectée à une deuxième partie d'extrémité de la languette de douille (200a), la base de douille (200b) est au moins partiellement localisée dans l'espace de logement (110), la base de douille (200b) scelle de façon étanche une ouverture, localisée sur la deuxième surface d'extrémité, du trou d'insertion (120), et la base de douille (200b) a une première partie de connexion électrique agencée de façon à tourner le dos à la languette de douille (200a) ; et
la carte de circuit imprimé (300) comprend une sous-carte de connexion électrique (310), et la sous-carte de connexion électrique (310) et la base de douille (200b) enferment l'espace de logement (110) ; la sous-carte de connexion électrique (310) est pourvue d'une deuxième partie de connexion électrique ; une surface de la sous-carte de connexion électrique (310) pourvue de la deuxième partie de connexion électrique fait face à la deuxième surface d'extrémité ; la base de douille (200b) est localisée entre le boîtier (100) et la sous-carte de connexion électrique (310) ; et la première partie de connexion électrique est électriquement connectée à la deuxième partie de connexion électrique ; dans lequel
la base de douille (200b) comprend une partie de fixation de base (210) et un corps principal de base (220) ;
la partie de fixation de base (210) est connectée au boîtier (100), et la partie de fixation de base (210) est pourvue d'une première rainure (211) et d'un premier trou d'évitement (212) ; une ouverture de la première rainure (211) et la languette de douille (200a) sont respectivement localisées sur deux côtés de la base de douille (200b) le dos tourné dos l'un à l'autre ; le premier trou d'évitement (212) est formé dans une paroi inférieure de la première rainure (211) ; une partie d'extrémité du corps principal de base (220) ayant le dos tourné à la languette de douille (200a) est fixée dans le premier trou d'évitement (212) ; et la première partie de connexion électrique est disposée sur le corps principal de base (220), et la première partie de connexion électrique est localisée dans la première rainure (211) ; et
la surface de la sous-carte de connexion électrique (310) pourvue de la deuxième partie de connexion électrique recouvre l'ouverture de la première rainure (211) ; la deuxième partie de connexion électrique est localisée dans la première rainure (211) ; une surface de la partie de fixation de base (210) où est formée la première rainure (211) est une première surface ; et la sous-carte de connexion électrique (310) et la première surface enferment l'espace de logement (110) ;
**caractérisé en ce que**
le bord de la partie de fixation de base (210) enfermant le premier trou d'évitement (212) est pourvu d'une troisième rainure (214) ; le corps principal de base (220) comprend un corps de base (222) et une plaque de séparation de borne (223) partiellement disposée dans le corps de base (222) ; et une partie de la plaque de séparation de borne (223) faisant saillie du corps de base (222) est en ajustement localisé avec la troisième rainure (214) dans la direction circonférentielle du premier trou d'évitement (212).

2. Le connecteur selon la revendication 1, dans lequel l'espace de logement (110) est utilisé pour être rempli d'un adhésif de scellement étanche (200c) ; la première partie de connexion électrique et la deuxième partie de connexion électrique sont localisées dans l'espace de logement (110) ; et un orifice d'injection d'adhésif (290) en communication avec l'espace de logement (110) est formé entre la sous-carte de connexion électrique (310) et la base de douille (200b) ; ou
la sous-carte de connexion électrique (310) ou la base de douille (200b) est pourvue d'un orifice d'injection d'adhésif (290) en communication avec l'espace de logement (110).

3. Le connecteur selon la revendication 2, dans lequel l'adhésif de scellement étanche (200c) remplit l'espace de logement (110) et recouvre la première partie de connexion électrique et la deuxième partie de connexion électrique ; la base de douille (200b) et la sous-carte de connexion électrique (310) sont liées et fixées par l'adhésif de scellement étanche (200c) ; et un côté de la base de douille (200b) tournant le dos à la languette de douille (200a) est scellé de façon étanche et recouvert par l'adhésif de scellement étanche (200c).

4. Le connecteur selon la revendication 1, dans lequel un bord de la partie de fixation de base (210) enfermant le premier trou d'évitement (212) est pourvu d'une deuxième rainure (213) ; le corps principal de base (220) comprend une première saillie (221) ; et la première saillie (221) est en ajustement localisé avec la deuxième rainure (213) dans une direction circonférentielle du premier trou d'évitement (212).

5. Le connecteur selon la revendication 1, dans lequel la base de douille (200b) comprend en outre une plaque de connexion métallique (230) ; la partie de fixation de base (210) est un composant métallique ; la plaque de connexion métallique (230) est connectée à la partie de fixation de base (210) par soudage, et la plaque de connexion métallique (230) est connectée à la plaque de séparation de borne (223) par soudage ; et le corps principal de base (220) est en ajustement restrictif avec la plaque de connexion métallique (230) dans une direction de l'ouverture de la première rainure (211).

6. Le connecteur selon la revendication 1, dans lequel une paroi latérale de la première rainure (211) est pourvue d'un orifice d'injection d'adhésif (290) en communication avec la première rainure (211) ; et l'orifice d'injection d'adhésif (290) est en communication avec l'espace de logement.

7. Le connecteur selon la revendication 1, dans lequel la carte de circuit imprimé (300) est une carte de circuit imprimé flexible, et la carte de circuit imprimé (300) comprend en outre un corps principal de carte de circuit imprimé (320) ; et la sous-carte de connexion électrique (310) est perpendiculaire au corps principal de carte de circuit imprimé (320) et forme une structure incurvée ; et/ou
la sous-carte de connexion électrique (310) est perpendiculaire à la languette de douille (200a).

8. Un dispositif électronique, comprenant le connecteur selon l'une quelconque des revendications 1 à 7.
